# EUROPEAN PATENT APPLICATION

(11) **EP 4 651 410 A1**
(43) Date of publication of application: **19.11.2025**
(21) Application number: 24752812.8
(22) Date of filing: 02.02.2024
(51) Int. Cl.: H04L 1/00

(54) **PROCESSING METHOD FOR ETHERNET DEVICE, AND ETHERNET SYSTEM**

(30) Priority: 09.02.2023 CN 202310143536
(71) Applicant: Huawei Technologies Co., Ltd., Shenzhen, Guangdong 518129 (CN)
(72) Inventor: DING, Li, Shenzhen, Guangdong 518129 (CN); YANG, Yibo, Shenzhen, Guangdong 518129 (CN); ZHANG, Chengmin, Shenzhen, Guangdong 518129 (CN); SUN, Desheng, Shenzhen, Guangdong 518129 (CN); XU, Chunbiao, Shenzhen, Guangdong 518129 (CN)
(74) Representative: Grünecker Patent- und Rechtsanwälte PartG mbB
(86) International application number: PCT/CN2024/075629
(87) International publication number: WO 2024/164957

(57) **Abstract**

Embodiments of this application provide an Ethernet device processing method and an Ethernet system. The Ethernet device processing method is applied to the Ethernet system. The Ethernet system includes a first device and a second device. The first device and the second device perform data communication by using an Ethernet technology. The first device includes a first media access control chip and a first physical layer chip. The first physical layer chip includes a first physical coding sublayer PCS and a first physical medium attachment sublayer PMA. The Ethernet device processing method includes: The first PMA receives a control signal sent by the first PCS, and the first PMA generates a maintenance bitstream and sends the maintenance bitstream to the second device, where the maintenance bitstream is used to maintain synchronization of link parameters between the first device and the second device. When no data is transmitted between the first device and the second device, the maintenance bitstream is transmitted between two ends to maintain synchronization of link parameters between the two ends, so that the first device quickly enters a working state when to-be-transmitted data is detected, to reduce wake-up time.

## Description

This application claims priority to Chinese Patent Application No. 202310143536.8, filed with the China National Intellectual Property Administration on February 9, 2023 and entitled "ETHERNET DEVICE PROCESSING METHOD AND ETHERNET SYSTEM", which is incorporated herein by reference in its entirety.

### TECHNICAL FIELD

This application relates to the field of communication technologies, and in particular, to an Ethernet device processing method and an Ethernet system.

### BACKGROUND

Network utilization of most Ethernet devices (such as a server and a personal computer PC) is low. When no data is transmitted in the Ethernet, a physical layer of the Ethernet device still sends an idle code block stream. As a result, the Ethernet device in an idle state still consumes power normally. Based on this, the institute of electrical and electronics engineers (Institute of Electrical and Electronics Engineers, IEEE) 802.3 standardized an energy efficient Ethernet (Energy Efficient Ethernet, EEE) technology in 2010. A basic idea of the EEE is to complete data transmission as quickly as possible, and enable the Ethernet device to enter a low power idle (Low Power Idle, LPI) state. In the LPI state, some circuits in the Ethernet are turned off to reduce power consumption.

The EEE defines two energy-saving modes: deep sleep and fast wake. When an Ethernet device uses the deep sleep energy-saving mode, if the Ethernet device has data to be transmitted, a physical layer of the Ethernet device is in an active (Active) state, and the data is normally transmitted in the Ethernet; or if the Ethernet device has no data to be transmitted, the physical layer enters a sleep (Sleep) state, where the sleep state lasts for preset time, and the physical layer enters a quiet (Quiet) state. To ensure a synchronous update of parameters of Ethernet devices serving as a receive end and a transmit end, physical layers periodically enter a refresh state. In the foregoing process, power consumption can be reduced only when the physical layer is in the quiet (Quiet) state, and the power consumption of the physical layer in the active state, the sleep state, or the refresh state is approximately the same. In addition, in the deep sleep energy-saving mode, wake-up time for the physical layer to switch from the sleep state to the active state is long. When the Ethernet device uses the fast wake energy-saving mode, if the Ethernet device has data to be transmitted, the physical layer of the Ethernet device is in an active (Active) state; or if the Ethernet device has no data to be transmitted, the physical layer of the Ethernet device enters a fast wake (Fast Wake) state. In the fast wake state, the physical layer continuously sends an LPI code block, and if no data is transmitted for a period of time, the physical layer enters an idle (idle) state or a wake (Wake) state. In the wake state, the physical layer sends an idle code block, and an Ethernet device as a receive end enters an LPI mode based on the received LPI code block. When the Ethernet device uses the fast wake energy-saving mode, the physical layer can be quickly woken up from the fast wake state to the active state. However, in the mode, power reduction is implemented primarily by disabling an upper layer in the LPI mode, and power consumption of the physical layer is not reduced.

### SUMMARY

In view of the foregoing content, it is necessary to provide an Ethernet device processing method and a system. When an Ethernet device has no data to be transmitted, a PMA of a first device sends, to a second device, a maintenance bitstream used to maintain synchronization of link parameters between the first device and the second device, and when data is transmitted between the first device and the second device, the first device and the second device quickly enter a working state, to reduce a wake-up delay of the Ethernet device.

According to a first aspect, an embodiment of this application provides an Ethernet device processing method that is applied to an Ethernet system. The Ethernet system includes a first device and a second device. The first device and the second device perform data communication by using an Ethernet technology. The first device includes a first media access control chip and a first physical layer chip. The first physical layer chip includes a first physical coding sublayer PCS and a first physical medium attachment sublayer PMA. The Ethernet device processing method includes: The first PMA receives a control signal sent by the first PCS, and the first PMA generates a maintenance bitstream and sends the maintenance bitstream to the second device, where the maintenance bitstream is used to maintain synchronization of link parameters between the first device and the second device.

According to the foregoing technical solution, when no data is transmitted between the first device and the second device, a maintenance bitstream is generated by a PMA of a physical layer chip of the first device, and the maintenance bitstream is sent to the second device, to maintain the synchronization of the link parameters between the first device and the second device. When detecting to-be-transmitted data, the first device may enter a working state from a power saving mode, to reduce wake-up time of the first device.

In a possible implementation of the first aspect, before generating the maintenance bitstream and sending the maintenance bitstream to the second device, the first PMA disables a data sending path-related function of the first PMA.

According to the foregoing technical solution, the data sending path-related function of the first PMA of the first device is disabled, to reduce power consumption of the first device. The data sending path-related function is a function of processing to-be-sent data by the first PMA of the first device when the first device sends data to the second device, for example, a serial-to-parallel conversion function and an alignment function.

Further, before the maintenance bitstream is generated and sent to the second device, a sending path-related function of the first PCS of the first device is also disabled.

If the first device includes a first FEC, before the maintenance bitstream is generated and sent to the second device, a function like coding of the first FEC of the first device is also disabled.

Further, if the first device includes a first PMD, when the data sending path-related function of the first PMA is disabled, the first PMD is in a normal working state, receives the maintenance bitstream sent by the first PMA, and then sends the maintenance bitstream to the second device.

In a possible implementation of the first aspect, the maintenance bitstream is a pseudo-random binary sequence PRBS bitstream.

According to the foregoing technical solution, the first device sends the PRBS bitstream to the second device, to maintain the synchronization of the link parameters between the first device and the second device.

In a possible implementation of the first aspect, if the first PCS uses 8B/10B coding, the PRBS bitstream is a PRBS7 bitstream; or if the first PCS uses 64B/66B coding, the PRBS bitstream is a PRBS31 bitstream or a PRBS58 bitstream.

According to the foregoing technical solution, a corresponding maintenance bitstream is selected based on a coding method, so that randomness of the maintenance bitstream is approximate to that of a real service bitstream. This ensures that transmission of the maintenance bitstream can maintain the synchronization of the link parameters between the first device and the second device.

In a possible implementation of the first aspect, the maintenance bitstream is a scrambled PRBS bitstream.

According to the foregoing technical solution, because the scrambled PRBS bitstream is more approximate to the real service bitstream between the first device and the second device, the synchronization of the link parameters between the first device and the second device can be maintained through the scrambled PRBS bitstream.

In a possible implementation of the first aspect, if a twisted pair interface is used between the first device and the second device, the maintenance bitstream is a training (training) bitstream.

According to the foregoing technical solution, the first PMA of the first device sends the training bitstream to the second device, to maintain the synchronization of the link parameters between the first device and the second device.

In a possible implementation of the first aspect, the first PMA receives a data control signal sent by the first PCS, and the first PMA stops generating the maintenance bitstream and enables the data sending path-related function of the first PMA.

According to the foregoing technical solution, when the first device detects the to-be-transmitted data, generating the maintenance bitstream is stopped, and the data sending path-related function of the first PMA is enabled, so that the first device quickly enters the working state, to reduce the wake-up time of the first device. The control signal may be a data (DATA) signal sent by the first PCS to the first PMA.

In a possible implementation of the first aspect, the second device includes a second media access control chip and a second physical layer chip. The second physical layer chip includes a second PCS and a second PMA. The Ethernet device processing method further includes: The second PMA receives a control signal sent by the second PCS, enables a PRBS bitstream detection function, and disables a data receiving path-related function of the second PMA.

According to the foregoing technical solution, the second device receives a control signal sent by the first device, enables the PRBS bitstream detection function of the second PMA to detect the PRBS bitstream sent by the first device, and disables the data receiving path-related function of the second PMA, to reduce power consumption of the second device. The control signal may be an LPI signal, so that the second device enters an LPI mode.

In a possible implementation of the first aspect, the PRBS bitstream detection function of the second PMA includes: detecting a quantity of error bits of the maintenance bitstream in a preset sliding window; if the quantity of error bits of the maintenance bitstream in the preset sliding window is less than or equal to a preset threshold, determining that a detection result is a success; or if the quantity of error bits of the maintenance bitstream in the preset sliding window is greater than a preset threshold, determining that a detection result is a failure.

According to the foregoing technical solution, a detection result is determined based on a relationship between a quantity of error PRBS bits in a sliding window and a preset threshold. In the detection method, a relationship between the preset threshold and a sliding window size may be set, to prevent a burst bit error from affecting the detection result, thereby improving reliability and robustness of the detection method.

In a possible implementation of the first aspect, the Ethernet device processing method further includes: if the detection result is a failure, disabling the PRBS bitstream detection function, and enabling the data receiving path-related function of the second PMA.

In a possible implementation of the first aspect, the Ethernet device processing method further includes: If the detection result is a success, the second PMA continues to perform the PRBS bitstream detection, and continues to disable the data receiving path-related function of the PMA.

According to a second aspect, an Ethernet system is provided. The Ethernet system includes a first device and a second device. The first device and the second device perform data communication by using an Ethernet technology. The first device includes a first media access control chip and a first physical layer chip. The first physical layer chip includes a first physical coding sublayer PCS and a first physical medium attachment sublayer PMA. The first PMA is configured to receive a control signal sent by the first PCS. After receiving an LPI signal, the first PMA is further configured to generate a maintenance bitstream and send the maintenance bitstream to the second device, where the maintenance bitstream is used to maintain synchronization of link parameters between the first device and the second device.

In a possible implementation of the second aspect, before generating the maintenance bitstream and sending the maintenance bitstream to the second device, the first PMA is further configured to disable a data sending path-related function of the first PMA.

In a possible implementation of the second aspect, the maintenance bitstream is a pseudo-random binary sequence PRBS bitstream.

In a possible implementation of the second aspect, if the first PCS uses 8B/10B coding, the PRBS bitstream is a PRBS7 bitstream; or if the first PCS uses 64B/66B coding, the PRBS bitstream is a PRBS31 bitstream or a PRBS58 bitstream.

In a possible implementation of the second aspect, the maintenance bitstream is a scrambled PRBS bitstream.

In a possible implementation of the second aspect, if a twisted pair interface is used between the first device and the second device, the maintenance bitstream is a training (training) bitstream.

In a possible implementation of the second aspect, the first PMA receives the control signal sent by the first PCS, and the first PMA stops generating the maintenance bitstream and enables the data sending path-related function of the first PMA.

In a possible implementation of the second aspect, the second device includes a second media access control chip and a second physical layer chip, and the second physical layer chip includes a second PCS and a second PMA.

The second PMA receives a control signal sent by the second PCS, enables a PRBS bitstream detection function, and disables a data receiving path-related function of the second PMA.

In a possible implementation of the second aspect, the PRBS bitstream detection function of the second PMA includes: detecting a quantity of error bits of the maintenance bitstream in a preset sliding window; if the quantity of error bits of the maintenance bitstream in the preset sliding window is less than or equal to a preset threshold, determining that a detection result is a success; or if the quantity of error bits of the maintenance bitstream in the preset sliding window is greater than a preset threshold, determining that a detection result is a failure.

In a possible implementation of the second aspect, the PRBS bitstream detection function of the second PMAfurther includes: if the detection result is a failure, disabling the PRBS bitstream detection function, and enabling the data receiving path-related function of the second PMA.

In a possible implementation of the second aspect, the PRBS bitstream detection function of the second PMA further includes: If the detection result is a success, the second PMA continues to perform the PRBS bitstream detection, and continues to disable the data receiving path-related function of the PMA.

It should be understood that, for technical effects brought by any design of the second aspect, refer to beneficial effects in the corresponding method provided above. Details are not described herein again.

### BRIEF DESCRIPTION OF DRAWINGS

FIG. 1 is a diagram of a network connected based on an Ethernet technology according to an embodiment of this application;
FIG. 2 is a diagram of another network connected based on an Ethernet technology according to an embodiment of this application;
FIG. 3 is a diagram of a physical layer and a media access control layer of an Ethernet device;
FIG. 4 is a schematic flowchart of an Ethernet device processing method according to an embodiment of this application;
FIG. 5 is a diagram of processing of a first physical layer chip of a first device according to an embodiment of this application;
FIG. 6 is a diagram of an Ethernet system according to an embodiment of this application;
FIG. 7 is a diagram in which a first device detects no to-be-transmitted data according to an embodiment of this application;
FIG. 8 is a diagram in which a first device detects to-be-transmitted data according to an embodiment of this application;
FIG. 9 is a diagram of a structure of a first device according to an embodiment of this application; and
FIG. 10 is a diagram of a structure of a second device according to an embodiment of this application.

### DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions in embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

Unless otherwise defined, all technical and scientific terms used in this specification have same meanings as those usually understood by a person skilled in the art of this application. Terms used in this specification of this application are merely for a purpose of describing specific embodiments, but are not intended to limit this application. It should be understood that, in this application, unless otherwise specified, "a plurality of" means two or more, and "and/or" includes any and all combinations of one or more of associated listed items.

For ease of understanding, the following describes technical solutions in embodiments of this application with reference to accompanying drawings.

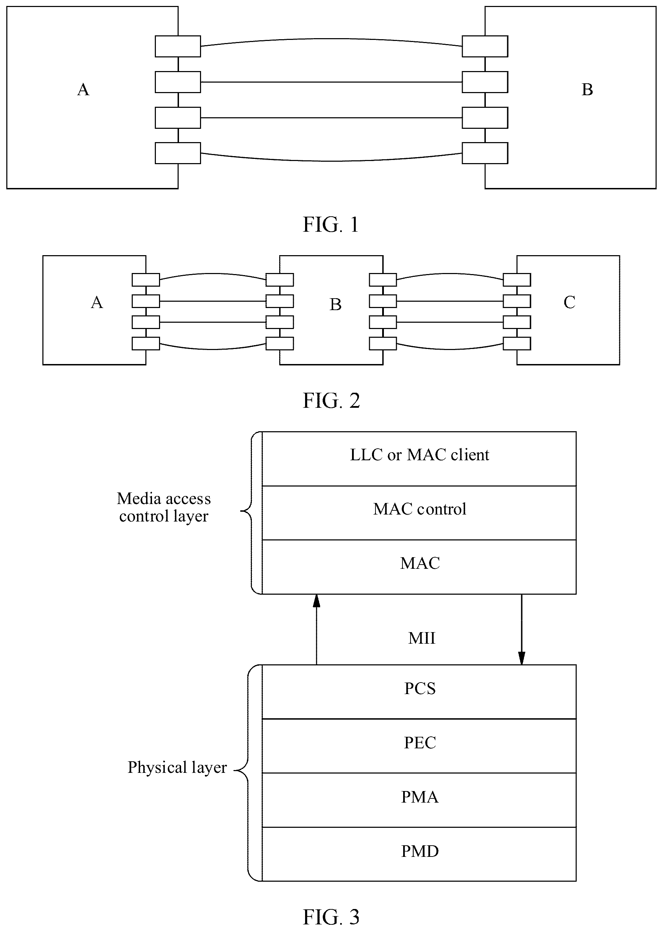

FIG. 1 is a diagram of a network connected based on an Ethernet technology.

In FIG. 1, a communication device A and a communication device B perform user data transmission based on an Ethernet, and the two communication devices that perform the user data transmission based on the Ethernet may be connected by using a cable or an optical fiber.

The Ethernet is a related standard released by the institute of electrical and electronics engineers (institute of electrical and electronics engineers, IEEE) 802.3 working group, and is widely applied to a telecommunication network.

FIG. 2 is a diagram of another network connected based on an Ethernet technology. In FIG. 2, a communication device A and a communication device B perform user data transmission based on an Ethernet, and the communication device B and a communication device C perform user data transmission based on the Ethernet. In this way, two communication devices may form a large-scale network based on the Ethernet technology, where the large-scale network may include a plurality of communication devices.

The communication device in FIG. 1 and FIG. 2 performs data transmission with another communication device by using the Ethernet technology, and therefore may also be referred to as an "Ethernet device". The Ethernet device may be a device like a server, a personal computer, a box or rack-mounted Ethernet switch, or a router.

Refer to FIG. 3. FIG. 3 is a diagram of a physical layer and a media access control layer of an Ethernet device. The Ethernet device includes a physical layer chip, a media access control layer chip, and another chip of a higher layer. The physical layer chip includes a forward error correction (Forward Error Correction, FEC) sublayer, a physical coding sublayer (Physical Coding Sublayer, PCS), a physical medium attachment sublayer (Physical Medium Attachment, PMA), and a physical media dependent sublayer (Physical Media Dependent, PMD). A chip of a media access control chip layer of the Ethernet device sends xMII information to the FEC sublayer of the physical layer chip through a some kind of MII (some kind of MII, xMII) interface, to perform bit code block coding and rate matching. The PCS performs coding according to a 64-bit (bit, B)/66B rule, to form a serial stream. Then, the PCS sends a 64B/66B code block to an FEC layer (the FEC layer of an Ethernet device used as a receive end decodes a received signal, finds an error bit generated in a transmission process, and corrects the error bit; and when the FEC cannot correct the error bit, a code block converted from a code word is marked as an E code block). After FEC coding, a data stream may be sent to the Ethernet device used as the receive end through the PMA and the PMD.

In FIG. 3, the FEC and the PCS are two modules that are independent of each other. It can be understood that, in another embodiment, the FEC may be used as a submodule in the PCS, that is, there is no independent PCS in the Ethernet device.

In FIG. 3, the physical layer chip of the Ethernet device includes the PMD. It may be understood that, in another embodiment, if two Ethernet devices perform data communication by using a twisted pair, the physical layer chip of the Ethernet device may not include the PMD.

To reduce power consumption of the Ethernet device, the IEEE 802.3 standardizes an EEE technology. The EEE defines two energy-saving modes: deep sleep and fast wake. In the deep sleep energy-saving mode, when there is no traffic in the Ethernet device, a function of the physical layer of the Ethernet device is deactivated (deactive), to achieve a great energy-saving effect. However, in the energy-saving mode, the function of the physical layer needs to be enabled again in a process in which the Ethernet device has no to-be-transmitted data, and then detects to-be-transmitted data and performs data transmission, and it takes a long time to enable the function of the physical layer. In the fast wake energy-saving mode, when the Ethernet device has no to-be-transmitted data, each module at the physical layer is still in a working state. In a process in which the Ethernet device has no to-be-transmitted data, and then detects to-be-transmitted data and performs data transmission, a function of the physical layer does not need to be enabled again, and wake-up time is short. However, because each module at the physical layer is not disabled, in the fast wake energy-saving mode, power consumption at the physical layer is not reduced.

The wake-up time may be a period of time from receiving an idle (idle) signal at the xMII interface to allowing to use a first data code word at the xMII interface.

Based on the foregoing problem, an embodiment of this application provides an Ethernet device processing method that is applied to an Ethernet system. The Ethernet system includes a first device and a second device. The first device and the second device may perform data communication based on an Ethernet technology. The Ethernet system may include two Ethernet devices that directly perform data communication based on the Ethernet technology shown in FIG. 1, or may include two Ethernet devices that perform data communication through another Ethernet device shown in FIG. 2, or certainly may be another type of network architecture. After a physical layer chip of the first device used as a transmit end receives a control signal sent by a media access control chip, the first device enters a low power mode, and a PMA of the physical layer chip of the first device generates a maintenance bitstream and sends the maintenance bitstream to the second device used as a receive end, to maintain synchronization of link parameters between the first device and the second device. In this way, after the first device detects to-be-transmitted data, a physical layer of the first device may quickly enter a working state from an LPI mode and perform data transmission, thereby reducing overall wake-up time of the first device.

Further, the control signal is an LPI signal transmitted between the physical layer chip and the media access control chip, so that the physical layer chip of the first device enters a low power idle mode.

For ease of description and understanding, in this embodiment of this application, the first device is used as the transmit end, and the second device is used as the receive end corresponding to the first device. It may be understood that, in another embodiment, the second device may be used as a transmit end, and the first device is used as a receive end corresponding to the second device.

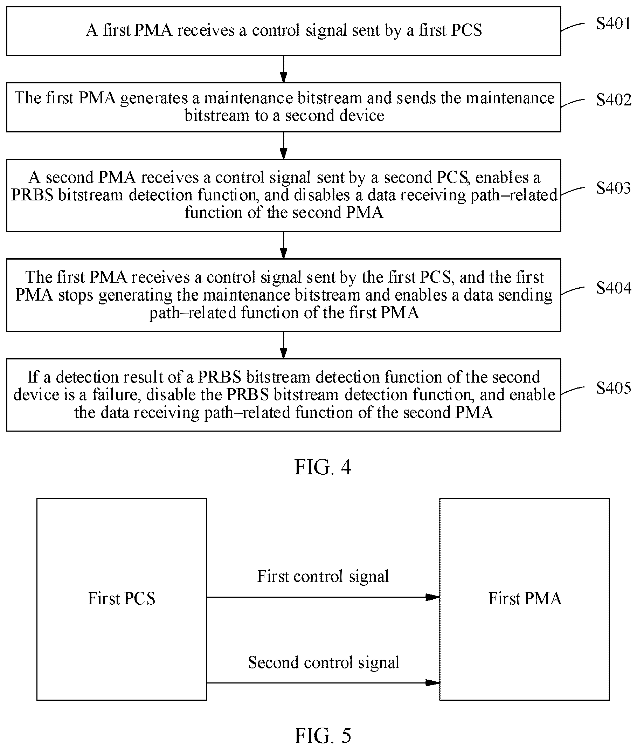

FIG. 4 is a schematic flowchart of an Ethernet device processing method according to an embodiment of this application. The Ethernet device processing method is applied to an Ethernet system. The Ethernet system includes a first device and a second device. The first device and the second device perform data communication based on an Ethernet.

The first device includes a first media access control chip and a first physical layer chip, and the first physical layer chip includes a first PCS and a first PMA.

It may be understood that, in another embodiment, the first physical layer chip may further include a first PMD. Certainly, if the first device and the second device communicate with each other by using a twisted pair, the first device and the second device may not include a PMD.

The Ethernet device processing method includes the following steps.

S401: The first PMA receives a control signal sent by the first PCS.

Specifically, when the first media access control chip of the first device detects no to-be-transmitted data, the first media access control chip continuously sends the control signal to the first physical layer chip through a data transmission path, where the control signal may carry an LPI indication, so that the first device enters an LPI mode.

S402: The first PMA generates a maintenance bitstream and sends the maintenance bitstream to the second device.

The maintenance bitstream is used to maintain synchronization of link parameters between the first device and the second device. The link parameter may be capability information about the first device and the second device that is determined in an auto-negotiation process of Ethernet devices at two ends of an Ethernet link when the first device and the second device establish the link.

Refer to FIG. 5. FIG. 5 is a diagram of processing of the first physical layer chip of the first device. As shown in FIG. 5, the first physical layer chip receives a first control signal, for example, an LPI signal, sent by the first media access control chip, and the first PCS of the first physical layer chip sends a first control signal of preset time to the first PMA. After the LPI signal is received, and the first PCS is disabled, the first PCS enters a quiet (Quiet) state, and sends a second control signal, for example, a state signal carrying the first PCS, to the first PMA, to notify the first PMA that the first PCS enters the quiet (Quiet) state. After receiving the state signal, the first PMA enables a maintenance bitstream functional module of the first PMA, for example, enables a PRBS send function in a PMAAFIFO, where the PRBS send function is used to generate a PRBS bitstream and send the PRBS bitstream to the second device, and the maintenance bitstream herein is the PRBS bitstream.

In this way, when detecting no to-be-transmitted data, the first device enters a power saving mode (for example, the LPI mode) from a working state, and after entering the power saving mode, the first device generates a maintenance bitstream and sends the maintenance bitstream to the second device, to maintain the synchronization of the link parameters between the first device and the second device. When detecting to-be-transmitted data, the first device may quickly enter the working state from the power saving mode, to reduce wake-up time of the first device.

In some embodiments, before generating the maintenance bitstream and sending the maintenance bitstream to the second device, the first PMA disables a data sending path-related function of the first PMA.

Specifically, after receiving the control signal (for example, the LPI signal) of the preset time sent by the first PCS, the first PMA receives a new control signal sent by the first PCS, where the new control signal carries the state of the first PCS, for example, the first PCS enters the quiet (Quiet) state, and determines that the first PCS enters the quiet (Quiet) state of the LPI mode. That is, in this case, a function of the first PCS is disabled. Then, the first PMA disables the data sending path-related function of the first PMA. After the data sending path-related function of the first PMA is disabled, a maintenance bitstream function of the first PMA is enabled, that is, for the first PMA, only the data sending path-related function is disabled, but the maintenance bitstream function may work normally. In this case, the first PMA may still generate the maintenance bitstream and send the maintenance bitstream to the second device. For the first device, before the maintenance bitstream is generated and sent to the second device, both the data sending path-related function of the first PMA of the first device and the first PCS are disabled.

The data sending path-related function is processing that needs to be performed by the first PMA when the first device sends data to the second device, for example, a serial-to-parallel conversion function and an alignment function.

In some embodiments, the first physical layer chip of the first device further includes the first PMD. In this case, that the first PMA generates the maintenance bitstream and sends the maintenance bitstream to the second device includes:

The first PMA generates the maintenance bitstream and sends the maintenance bitstream to the first PMD, and the first PMD receives the maintenance bitstream generated by the first PMA and sends the maintenance bitstream to the second device.

In this case, the data sending path-related function of the first PMA of the first physical layer chip of the first device and the first PCS are disabled, but the first PMD is in a working state and continuously sends maintenance bitstream to the second device, to maintain the synchronization of the link parameters between the first device and the second device. When the first device has no to-be-transmitted data, disabling of the first PC S and the first PMA is decoupled from disabling of the PMD, and the data sending path-related function of the first PMA and the first PCS are disabled, to reduce power consumption of the physical layer chip of the first device. The first PMD is enabled to be in the working state and continuously send the maintenance bitstream to the second device, so that the physical layer chip of the first device can quickly enter a working state when the to-be-transmitted data is detected, thereby reducing the wake-up time of the first device. In this way, according to the foregoing Ethernet processing method, when the first device has no data to be transmitted, the power consumption of the physical layer chip of the first device can be reduced while the wake-up time of the first device is reduced.

In some embodiments, the first physical layer chip of the first device further includes a first FEC sublayer. When the first device has no data to be transmitted, both the first FEC sublayer and the first PCS are disabled.

It may be understood that the first FEC sublayer may be used as a functional module in the first PCS, or the first FEC sublayer and the first PCS may be two functional modules that are independent of each other.

In some embodiments, the maintenance bitstream functional module of the first PMA is located at an ingress of the first PMD, that is, the maintenance bitstream functional module of the first PMA is a module that is closest to the first PMD and that is in a plurality of modules of the first PMA, to reduce a transmission path for the maintenance bitstream between the first PMD and the first PMA.

In some embodiments, the maintenance bitstream is a pseudo-random binary sequence (Pseudo-Random Binary Sequence, PRBS) bitstream. In this way, after detecting the to-be-transmitted data and entering the LPI mode, the first device continuously sends the pseudo-random binary sequence bitstream to the second device by using the first PMA or the first PMD of the first physical layer chip of the first device, to maintain the synchronization of the link parameters between the first device and the second device.

In some embodiments, if the first PCS uses 8B/10B coding, the PRBS bitstream is a PRBS7 bitstream.

If the first PCS uses 64B/66B coding, the PRBS bitstream is a PRBS31 bitstream or a PRBS58 bitstream. In this way, a corresponding maintenance bitstream is selected based on a coding method, so that randomness of the maintenance bitstream is approximate to that of a real service bitstream. This ensures that transmission of the maintenance bitstream can maintain the synchronization of the link parameters between the first device and the second device.

In some embodiments, the maintenance bitstream is a scrambled PRBS bitstream. Because the scrambled PRBS bitstream is more approximate to the real service bitstream between the first device and the second device, the synchronization of the link parameters between the first device and the second device can be maintained through the scrambled PRBS bitstream.

It may be understood that, in another embodiment, the maintenance bitstream may be another type of pseudo-random binary sequence bitstream that is selected based on a coding manner of the first PCS or a link feature of the PMD, provided that the first device sends the maintenance bitstream to the second device when the first device has no data to be transmitted, to maintain the synchronization of the link parameters between the first device and the second device.

In some embodiments, if a twisted pair interface is used to perform data communication between the first device and the second device, the maintenance bitstream is a training (training) bitstream. In this way, the twisted pair interface is used to perform data communication between the first device and the second device, and the first PMA of the first device sends the training bitstream to the second device, to maintain the synchronization of the link parameters between the first device and the second device.

It may be understood that, when the first media access control chip of the first device detects no to-be-transmitted data, the first media access control chip sends the LPI signal to the first physical layer chip, and the first physical layer chip sends the LPI signal to the second device, to notify the second device of a state of the first device, so that the second device enters the LPI mode based on the state of the first device, to reduce power consumption of the second device.

In some embodiments, the second device includes a second media access control chip and a second physical layer chip, and the second physical layer chip includes a second PCS and a second PMA.

The foregoing Ethernet device processing method further includes the following step.

S403: The second PMA receives a control signal sent by the second PCS, enables a PRBS bitstream detection function, and disables a data receiving path-related function of the second PMA.

Specifically, when the second device detects no to-be-transmitted data, the first device enters the foregoing power saving mode, for example, the LPI mode, and sends the LPI signal to the second device. After the second PCS of the second device detects the LPI signal, the second PCS sends the control signal carrying an LPI signal indication to the second PMA, so that the second PMA enables the PRBS bitstream detection function and disables the data receiving path-related function of the second PMA. The PRBS bitstream detection function is enabled, to detect the PRBS bitstream sent by the first device and maintain the synchronization of the link parameters between the first device and the second device, and a mode in which the first device is in is deduced through a PRBS bitstream detection result of the PRBS bitstream detection function of the second device. This is simple and efficient, and has simple processing logic.

Because the PRBS bitstream is transmitted between the first device and the second device, and data is not transmitted through a data path, the data receiving path-related function of the second PMA of the second device and the second PCS are disabled, to reduce power consumption of a physical layer of the second device.

In some embodiments, the second physical layer chip of the second device further includes a second PMD. In this case, when there is no data transmission that is related to a normal data service and that is between the first device and the second device, and only the first device sends the maintenance bitstream to the second device, the second PMD receives the maintenance bitstream and sends the maintenance bitstream to the second PCS, that is, the second PMD of the second device keeps being in a working state. When the second device detects that the first device performs data transmission, the second device does not need to enable the second PMD again, thereby reducing wake-up time of the second physical layer chip of the second device.

In some embodiments, the PRBS bitstream detection function of the second PMA of the second device includes:
detecting a quantity of error bits of the maintenance bitstream in a preset sliding window;
if the quantity of error bits of the maintenance bitstream in the preset sliding window is less than or equal to a preset threshold, determining that a detection result is a success; or
if the quantity of error bits of the maintenance bitstream in the preset sliding window is greater than a preset threshold, determining that a detection result is a failure.

Specifically, the PRBS bitstream detection function of the second PMA is used to receive a PRBS bitstream sent by the first device, determine a detection result based on a relationship between a quantity of error bits of the PRBS bitstream in a preset sliding window and a preset threshold, determine a state of the first device based on the detection result, and then adjust a state of the second PMA based on the state of the first device, to adjust the state of the first device based on a state of the second device. That is, the second device determines a working state of a peer end based on detection on the maintenance bitstream.

The detection result is determined based on the relationship between the quantity of error PRBS bitstreams in the sliding window and the preset threshold. In a detection method based on a window, a relationship between the preset threshold and a sliding window size may be set, to prevent a burst bit error from affecting the detection result, thereby improving reliability and robustness of the detection method.

Refer to Table 1. Table 1 is an example of detecting a quantity of bits of a PRBS bitstream based on a sliding window. In Table 1, a transmission rate (rate) of a maintenance bitstream is 100 Gbps, a sliding window (window) is 256 bits, detect time (detect time) is 0.00256 microseconds, and a pre-bit error rate (PRE-BER) is 2.00E-04. Then, a corresponding possible probability (probability) and mean time (mean time) (unit: year) are set, and a detection result is determined based on a relationship between an error maintenance bitstream and a preset threshold, where the preset threshold is 39. If a quantity of error bits of the maintenance bitstream is less than or equal to 39, it is determined that the detection result is a success; or if a quantity of error bits of the maintenance bitstream is greater than 39, it is determined that the detection result is a failure. In this way, a relationship between the preset threshold and the sliding window may be adjusted, to prevent a bit error caused by various exceptions from affecting the detection result, thereby improving accuracy of the detection result.

**Table 1**

| Rate (rate) | Sliding window size | Detect time | Pre-bit error rate | Random bit error | Quantity of error bits of a maintenance bitstream | Possible probability | Mean time |
|---|---|---|---|---|---|---|---|
| 100 | 256 | 0.00256 | 2.00E-04 | 1 | 3 | 4.87E-02 | 1.67E-15 |
| 100 | 256 | 0.00256 | 2.00E-04 | 2 | 6 | 1.24E-03 | 6.54E-14 |
| 100 | 256 | 0.00256 | 2.00E-04 | 3 | 9 | 2.10E-05 | 3.86E-12 |
| 100 | 256 | 0.00256 | 2.00E-04 | 4 | 12 | 2.66E-07 | 3.05E-10 |
| 100 | 256 | 0.00256 | 2.00E-04 | 5 | 15 | 2.68E-09 | 3.03E-08 |
| 100 | 256 | 0.00256 | 2.00E-04 | 6 | 18 | 2.24E-11 | 3.62E-06 |
| 100 | 256 | 0.00256 | 2.00E-04 | 7 | 21 | 1.60E-13 | 5.06E-04 |
| 100 | 256 | 0.00256 | 2.00E-04 | 8 | 24 | 9.98E-16 | 8.13E-02 |
| 100 | 256 | 0.00256 | 2.00E-04 | 9 | 27 | 5.50E-18 | 1.48E+01 |
| 100 | 256 | 0.00256 | 2.00E-04 | 10 | 30 | 2.72E-20 | 2.99E+03 |
| 100 | 256 | 0.00256 | 2.00E-04 | 11 | 33 | 1.22E-22 | 6.68E+05 |
| 100 | 256 | 0.00256 | 2.00E-04 | 12 | 36 | 4.97E-25 | 1.63E+08 |
| 100 | 256 | 0.00256 | 2.00E-04 | 13 | 39 | 1.86E-27 | 4.35E+10 |

If a maintenance bitstream sent by the first device is a training bitstream, a maintenance bitstream detection function of the second PMA of the second device is used to detect the training bitstream, and determine a working state of the first device based on a detection result. For example, according to the foregoing embodiment, the detection result of the training bitstream is determined by using the detection method based on a window of the pseudo-random binary sequence bitstream.

It may be understood that, if the first device in the LPI mode detects the to-be-transmitted data, the first device enters a normal working state from the LPI mode, to send the to-be-transmitted data to the second device.

The foregoing Ethernet processing method further includes the following step.

S404: The first PMA receives a control signal sent by the first PCS, and the first PMA stops generating the maintenance bitstream and enables the data sending path-related function of the first PMA.

Specifically, when detecting the to-be-transmitted data, the first media access control chip of the first device sends an idle (idle) bitstream to the first physical layer chip, to enable the first PCS. The first PCS sends the control signal to the first PMA, where the control signal may carry a data (DATA) signal, to notify the first PMA that the to-be-transmitted data is detected. The first PMA receives the control signal sent by the first PCS, and the first PMA stops generating the maintenance bitstream and enables the data sending path-related function of the first PMA. That is, when the first device detects the to-be-transmitted data, provided that the data sending path-related function of the second PMA and the first PCS are enabled, the first physical layer chip of the first device can quickly enter the working state, thereby reducing overall wake-up time of the first device. Because the maintenance bitstream keeps being transmitted between the first device and the second device, the synchronization of the link parameters between the first device and the second device does not need to be performed in a wake-up process of the first device, to reduce the wake-up time of the first device.

In some embodiments, the first physical layer chip further includes a first PMD. After the first device detects no to-be-transmitted data and enters the LPI mode, the first PMA continuously sends the maintenance bitstream to the first PMD, and the first PMD sends the maintenance bitstream to the second device. That is, in a process in which there is no to-be-transmitted data but only the maintenance bitstream transmitted between the first device and the second device, the first PMD keeps being in the working state. In this way, when the first device detects the to-be-transmitted data and enters the working state, the first PMD does not need to be enabled again, thereby reducing the overall wake-up time of the first device.

The first device detects the to-be-transmitted data, and enters the normal working state from the LPI mode. In a process in which the first device enters the normal working state from the LPI mode, the first PMA stops generating the maintenance bitstream and no longer sends the maintenance bitstream to the second device. If the second device deduces, based on the received maintenance bitstream, that the first device enters the normal working state, the second device also enters the normal working state from the LPI mode, to receive service data sent by the first device.

In some embodiments, the Ethernet device processing method further includes the following step.

S405: If the detection result of the PRBS bitstream detection function of the second device is a failure, disable the PRBS bitstream detection function, and enable the data receiving path-related function of the second PMA.

Specifically, when the PRBS bitstream detection function of the second PMA determines that the detection result is a failure, it is determined that the first device exits the LPI mode, that is, the first device is about to send a non-maintenance bitstream, for example, service-related data, to the second device. When entering an active (Active) state, the first device no longer sends the maintenance bitstream to the second device, and the second device disables the PRBS bitstream detection function. To receive data sent by the first device, the second device enters the active state from the LPI mode. The second device enters the active state by enabling the data receiving path-related function of the second PMA. Further, the second device that enters the active state further needs to enable the second PCS.

In some embodiments, if the second physical layer chip further includes a second FEC, after the PRBS bitstream detection function is disabled, the second FEC further needs to be enabled.

It may be understood that, when detecting no to-be-transmitted data, the first device continuously sends the maintenance bitstream to the second device. The second device receives the maintenance bitstream sent by the first device and determines, based on the maintenance bitstream, that the first device is in the LPI mode. Then, the second device continues to perform PRBS bitstream detection, and continues to disable the data receiving path-related function of the PMA.

In some embodiments, the Ethernet device processing method further includes:
If the detection result of the PRBS bitstream detection function of the second device is a success, the second PMA continues to perform the PRBS bitstream detection, and disables the data receiving path-related function of the PMA.

Specifically, it is determined, based on the detection result, that the state of the first device does not change, and the PRBS bitstream detection function of the second PMA of the second device continues to perform the PRBS bitstream detection, and continues to disable the data receiving path-related function of the PMA. That is, it is determined, based on the detection result, that the state of the first device does not change, and the second device continues to remain in an original state.

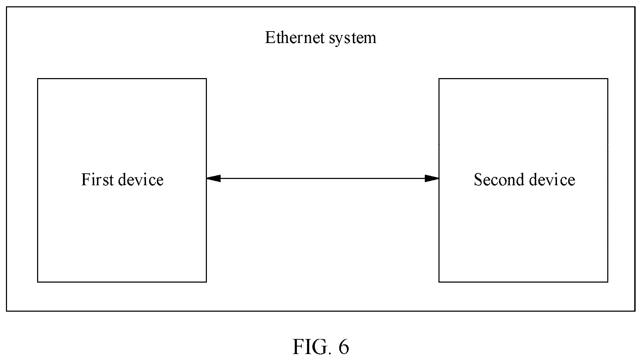

Refer to FIG. 6. FIG. 6 is a diagram of an Ethernet system according to an embodiment of this application. The Ethernet system includes a first device and a second device. The first device and the second device perform data communication based on an Ethernet technology. The first device may perform the steps of the first device in the Ethernet device processing method in FIG. 4, and the second device may perform the steps of the second device in the Ethernet device processing method in FIG. 4.

Specifically, the Ethernet system includes a first device and a second device. The first device and the second device perform data communication by using an Ethernet technology. The first device includes a first media access control chip and a first physical layer chip. The first physical layer chip includes a first physical coding sublayer PCS and a first physical medium attachment sublayer PMA. The first PMA is configured to receive a low power idle LPI signal sent by the first PCS. After receiving an LPI signal, the first PMA is further configured to generate a maintenance bitstream and send the maintenance bitstream to the second device, where the maintenance bitstream is used to maintain synchronization of link parameters between the first device and the second device.

In some embodiments, before generating the maintenance bitstream and sending the maintenance bitstream to the second device, the first PMA is further configured to disable a data sending path-related function of the first PMA.

In some embodiments, the maintenance bitstream is a pseudo-random binary sequence PRBS bitstream.

In some embodiments, if the first PCS uses 8B/10B coding, the PRBS bitstream is a PRBS7 bitstream; or if the first PCS uses 64B/66B coding, the PRBS bitstream is a PRBS31 bitstream or a PRBS58 bitstream.

In some embodiments, the maintenance bitstream is a scrambled PRBS bitstream. Because the scrambled PRBS bitstream is more approximate to the real service bitstream between the first device and the second device, the synchronization of the link parameters between the first device and the second device can be maintained through the scrambled PRBS bitstream.

In some embodiments, if a twisted pair interface is used between the first device and the second device, the maintenance bitstream is a training (training) bitstream.

In some embodiments, the first PMA receives a control signal sent by the first PCS, and the first PMA stops generating the maintenance bitstream and enables the data sending path-related function of the first PMA. The control signal may be a data (DATA) signal sent by the first PCS to the first PMA.

In some embodiments, the second device includes a second media access control chip and a second physical layer chip, and the second physical layer chip includes a second PCS and a second PMA.

The second PMA receives a control signal sent by the second PCS, enables a PRBS bitstream detection function, and disables a data receiving path-related function of the second PMA. The control signal may carry an LPI indication.

In some embodiments, the PRBS bitstream detection function of the second PMA includes: detecting a quantity of error bits of the maintenance bitstream in a preset sliding window; if the quantity of error bits of the maintenance bitstream is less than or equal to a preset threshold, determining that a detection result is a success; or if the quantity of error bits of the maintenance bitstream is greater than a preset threshold, determining that a detection result is a failure.

In some embodiments, the PRBS bitstream detection function of the second PMA further includes: if the detection result is a failure, disabling the PRBS bitstream detection function, and enabling the data receiving path-related function of the second PMA.

In some embodiments, the PRBS bitstream detection function of the second PMA further includes: If the detection result is a success, the second PMA continues to perform the PRBS bitstream detection, and continues to disable the data receiving path-related function of the PMA.

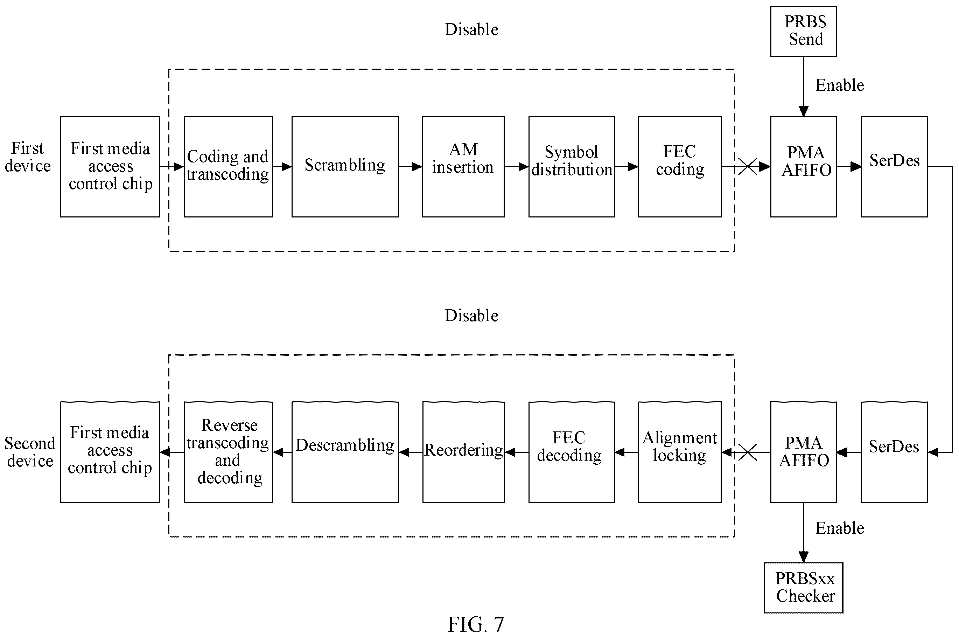

Refer to FIG. 7. FIG. 7 is a diagram in which a first device detects no to-be-transmitted data according to an embodiment of this application.

In FIG. 7, a first device and a second device perform data communication by using a 100GBASE-KR4 interface. The first device includes a first media access control chip and a first physical layer chip. The first physical layer chip includes a first PCS and a first PMA. The second device includes a second media access control chip and a second physical layer chip. The second physical layer chip includes a second PCS and a second PMA.

Specifically, when detecting no to-be-transmitted data, the first media access control MAC chip of the first device continuously sends an LPI signal to the first physical layer chip, so that the first physical layer chip disables (disable) some functional modules and enables (enable) a maintenance bitstream function.

The disabled functional modules may include: coding and transcoding, scrambling, AM insertion, symbol distribution, and FEC coding. The maintenance bitstream function may be in a PRBS send in a PMA AFIFO of the second PMA, and is used to generate a PRBS bitstream and send the PRBS bitstream to the second device.

The second device receives an LPI signal sent by the first device, and determines that the first device enters an LPI mode. The second physical layer chip disables some functional modules and enables a PRBS bitstream detection function.

The functional modules disabled by the second physical layer chip may include: alignment locking, jitter elimination, reordering, FEC decoding, reverse transcoding and coding and decoding, descrambling, and de-interleaving. The PRBS bitstream detection function may be in a PRBS checker in the PMA AFIFO of the second device.

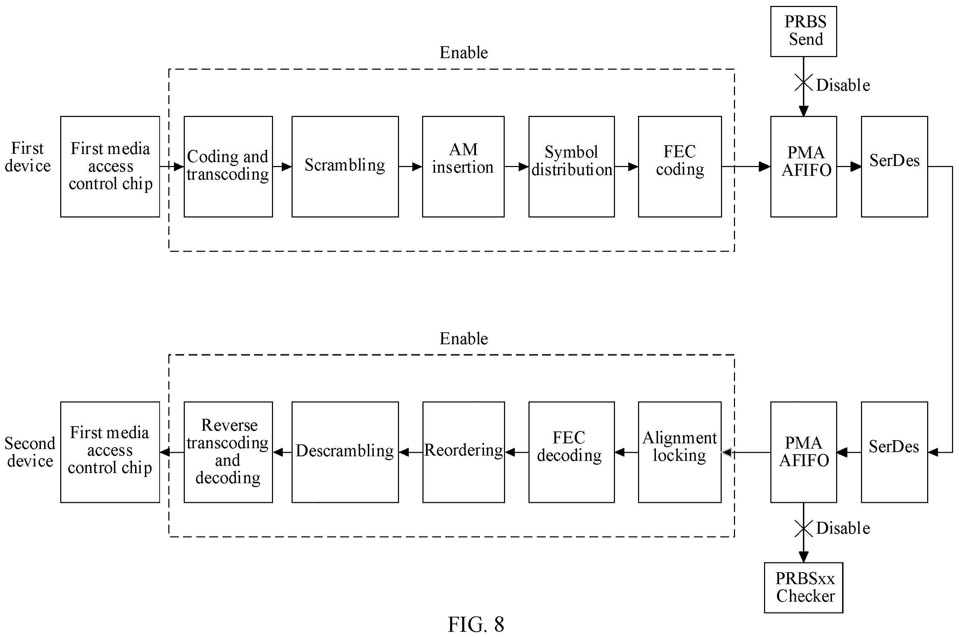

Refer to FIG. 8. FIG. 8 is a diagram in which a first device detects to-be-transmitted data according to an embodiment of this application.

In FIG. 8, a first device and a second device perform data communication by using a 100GBASE-KR4 interface. The first device includes a first media access control chip and a first physical layer chip. The first physical layer chip includes a first PCS and a first PMA. The second device includes a second media access control chip and a second physical layer chip. The second physical layer chip includes a second PCS and a second PMA.

Specifically, when detecting to-be-transmitted data, the first media access control MAC chip of the first device continuously sends an idle signal to the first physical layer chip, so that the first physical layer chip enables some functional modules and disables a maintenance bitstream function.

The enabled functional modules may include: coding and transcoding, scrambling, AM insertion, symbol distribution, and FEC coding. The maintenance bitstream function may be in a PRBS send in a PMA AFIFO of the second PMA, and is used to generate a PRBS bitstream and send the PRBS bitstream to the second device.

The second device receives an idle signal sent by the first device, and determines that the first device enters a working state. The second physical layer chip enables some functional modules and disables a PRBS bitstream detection function.

The functional modules enabled by the second physical layer chip may include: alignment locking, jitter elimination, reordering, FEC decoding, reverse transcoding and coding and decoding, descrambling, and de-interleaving. The PRBS bitstream detection function may be in a PRBS checker in the PMA AFIFO of the second device.

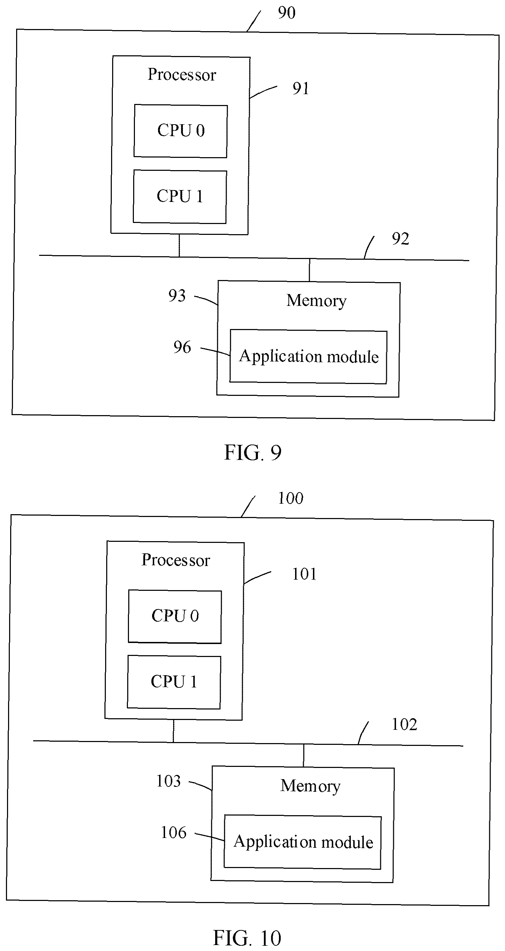

Refer to FIG. 9. FIG. 9 is a diagram of a structure of a first device according to an example embodiment of this application. The Ethernet device may implement a function of the first device in FIG. 4.

The first device 90 includes a processor 91, a bus 92, and a memory 93.

The processor 91 may include one or more central processing units (Central Processing Units, CPU), for example, a CPU 0 and a CPU 1. The processor 91 executes various function applications and service processing by running a software program and a module.

The memory 93 is connected to the processor 91 through the bus 92.

The memory 93 may be configured to store the software program and the module, where the software program and the module are executed by the processor 91. In addition, the memory 93 may further store various types of service data. In this embodiment of this application, the software program and the module that are stored in the memory 93 may include an application module 96 required by at least one function that is executed by the processor 91.

Refer to FIG. 10. FIG. 10 is a diagram of a structure of a second device according to an example embodiment of this application. The second device may implement a function of the second device in FIG. 4.

The second device 100 includes a processor 101, a bus 102, and a memory 103.

The processor 101 may include one or more central processing units (Central Processing Units, CPU), for example, a CPU 0 and a CPU 1. The processor 101 executes various function applications and service processing by running a software program and a module.

The memory 103 is connected to the processor 101 through the bus 102.

The memory 103 may be configured to store the software program and the module, where the software program and the module are executed by the processor 101. In addition, the memory 103 may further store various types of service data. In this embodiment of this application, the software program and the module that are stored in the memory 103 may include an application module 106 required by at least one function that is executed by the processor 101.

A person skilled in the art should understand that embodiments of this application may be provided as a method, a system, or a computer program product. Therefore, this application may use a form of hardware embodiments, software embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code. The computer program code may be stored in a computer-readable memory that can guide a computer or another programmable data processing device to operate in a particular manner.

An embodiment further provides a computer storage medium. The computer storage medium stores computer instructions. When the computer instructions are run on an ingress device, the ingress device is enabled to perform the foregoing related method steps, to implement the method for reducing power consumption of an Ethernet device in the foregoing embodiments.

An embodiment further provides a computer program product. When the computer program product runs on an ingress device, the ingress device is enabled to perform the foregoing related steps, to implement the method for reducing power consumption of an Ethernet device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the method for reducing power consumption of an Ethernet device in the foregoing method embodiments.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the apparatus embodiment described above is merely an example. For example, the modules or division into the modules is merely logical function division. There may be another division manner during actual implementation. For example, a plurality of modules or components may be combined or integrated into another apparatus, or some features may be ignored or not performed. In addition, the displayed or discussed mutual couplings or direct couplings or communication connections may be implemented through some interfaces. Indirect couplings or communication connections between apparatuses or modules may be implemented in electronic, mechanical, or other forms.

Modules described as separate components may be or may not be physically separated. Components displayed as modules may be one physical module or a plurality of physical modules, that is, may be located at one location or may be distributed at a plurality of different locations. Some or all the modules may be selected according to actual needs to achieve the objectives of the solutions of embodiments.

In addition, functional modules in each embodiment of this application may be integrated into one processing module, or each of the modules may exist alone physically, or two or more modules are integrated into one module. The integrated module may be implemented in a form of hardware, or may be implemented in a form of a software functional module.

If the integrated module is implemented in a form of a software function unit and sold or used as an independent product, the module may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An Ethernet device processing method, applied to an Ethernet system, wherein the Ethernet system comprises a first device and a second device, the first device and the second device perform data communication by using an Ethernet technology, the first device comprises a first media access control chip and a first physical layer chip, the first physical layer chip comprises a first physical coding sublayer PCS and a first physical medium attachment sublayer PMA, and the Ethernet device processing method comprises:
receiving, by the first PMA, a control signal sent by the first PCS, and generating, by the first PMA, a maintenance bitstream and sending the maintenance bitstream to the second device, wherein the maintenance bitstream is used to maintain synchronization of link parameters between the first device and the second device.

2. The Ethernet device processing method according to claim 1, wherein
the first PMA disables a data sending path-related function of the first PMA before generating the maintenance bitstream and sending the maintenance bitstream to the second device.

3. The Ethernet device processing method according to claim 1 or 2, wherein
the maintenance bitstream is a pseudo-random binary sequence PRBS bitstream or a scrambled PRBS bitstream.

4. The Ethernet device processing method according to claim 3, wherein
if the first PCS uses 8B/10B coding, the PRBS bitstream is a PRBS7 bitstream; or
if the first PCS uses 64B/66B coding, the PRBS bitstream is a PRBS31 bitstream or a PRBS58 bitstream.

5. The Ethernet device processing method according to claim 3 or 4, wherein the maintenance bitstream is a scrambled PRBS bitstream.

6. The Ethernet device processing method according to claim 1 or 2, wherein
if a twisted pair interface is used between the first device and the second device, the maintenance bitstream is a training training bitstream.

7. The Ethernet device processing method according to any one of claims 1 to 6, wherein
the first PMA receives a control signal sent by the first PCS, and the first PMA stops generating the maintenance bitstream and enables the data sending path-related function of the first PMA.

8. The Ethernet device processing method according to any one of claims 3 to 5, wherein the second device comprises a second media access control chip and a second physical layer chip, the second physical layer chip comprises a second PCS and a second PMA, and the Ethernet device processing method further comprises:
receiving, by the second PMA, a control signal sent by the second PCS, enabling the PRBS bitstream detection function, and disabling a data receiving path-related function of the second PMA.

9. The Ethernet device processing method according to claim 8, wherein the PRBS bitstream detection function of the second PMA comprises:
detecting a quantity of error bits of the maintenance bitstream in a preset sliding window;
if the quantity of error bits of the maintenance bitstream in the preset sliding window is less than or equal to a preset threshold, determining that a detection result is a success; or
if the quantity of error bits of the maintenance bitstream in the preset sliding window is greater than a preset threshold, determining that a detection result is a failure.

10. The Ethernet device processing method according to claim 9, wherein the Ethernet device processing method further comprises:
if the detection result is a failure, disabling the PRBS bitstream detection function, and enabling the data receiving path-related function of the second PMA.

11. The Ethernet device processing method according to claim 9 or 10, wherein the Ethernet device processing method further comprises:
if the detection result is a success, continuing, by the second PMA, to perform PRBS bitstream detection, and continuing to disable the data receiving path-related function of the PMA.

12. An Ethernet system, wherein the Ethernet system comprises a first device and a second device, the first device and the second device perform data communication by using an Ethernet technology, the first device comprises a first media access control chip and a first physical layer chip, and the first physical layer chip comprises a first physical coding sublayer PCS and a first physical medium attachment sublayer PMA, wherein
the first PMA is configured to receive a control signal sent by the first PCS; and
after receiving the control signal, the first PMA is further configured to generate a maintenance bitstream and send the maintenance bitstream to the second device, wherein the maintenance bitstream is used to maintain synchronization of link parameters between the first device and the second device.

13. The Ethernet system according to claim 12, wherein
before generating the maintenance bitstream and sending the maintenance bitstream to the second device, the first PMA is further configured to disable a data sending path-related function of the first PMA.

14. The Ethernet system according to claim 12 or 13, wherein
the maintenance bitstream is a pseudo-random binary sequence PRBS bitstream.

15. The Ethernet system according to claim 14, wherein
if the first PCS uses 8B/10B coding, the PRBS bitstream is a PRBS7 bitstream; or
if the first PCS uses 64B/66B coding, the PRBS bitstream is a PRBS31 bitstream or a PRBS58 bitstream.

16. The Ethernet system according to claim 14 or 15, wherein the maintenance bitstream is a scrambled PRBS bitstream.

17. The Ethernet system according to claim 12 or 13, wherein
if a twisted pair interface is used between the first device and the second device, the maintenance bitstream is a training training bitstream.

18. The Ethernet system according to any one of claims 12 to 17, wherein
the first PMA receives a data control signal sent by the first PCS, and the first PMA stops generating the maintenance bitstream and enables the data sending path-related function of the first PMA.

19. The Ethernet system according to claim 14 or 15, wherein the second device comprises a second media access control chip and a second physical layer chip, and the second physical layer chip comprises a second PCS and a second PMA, wherein
the second PMAreceives a control signal sent by the second PCS, enables the PRBS bitstream detection function, and disables a data receiving path-related function of the second PMA.

20. The Ethernet system according to claim 19, wherein the PRBS bitstream detection function of the second PMA comprises:
detecting a quantity of error bits of the maintenance bitstream in a preset sliding window;
if the quantity of error bits of the maintenance bitstream in the preset sliding window is less than or equal to a preset threshold, determining that a detection result is a success; or
if the quantity of error bits of the maintenance bitstream in the preset sliding window is greater than a preset threshold, determining that a detection result is a failure.

21. The Ethernet system according to claim 20, wherein the PRBS bitstream detection function of the second PMA further comprises:
if the detection result is a failure, disabling the PRBS bitstream detection function, and enabling the data receiving path-related function of the second PMA.

22. The Ethernet system according to claim 20 or 21, wherein the PRBS bitstream detection function of the second PMA further comprises:
if the detection result is a success, continuing, by the second PMA, to perform the PRBS bitstream detection, and continuing to disable the data receiving path-related function of the PMA.
